# EUROPÄISCHE PATENTANMELDUNG

(11) **EP 1 843 296 A1**
(43) Veröffentlichungstag der Anmeldung: **10.10.2007**
(21) Anmeldenummer: 06010410.6
(22) Anmeldetag: 19.05.2006
(51) Int. Cl.: G06T 11/00

(54) **Verfahren zur reproduzierbaren Erzeugung von Ansichten tomographischer Bilddaten**

(30) Priorität: 06.04.2006 DE 102006016601
(71) Anmelder: SIEMENS AKTIENGESELLSCHAFT, 80333 München (DE)
(72) Erfinder: Böing, Dieter, 91058 Erlangen (DE); Malischnig, Gregor, 91056 Erlangen (DE)

(57) **Zusammenfassung**

Die vorliegende Erfindung betrifft ein Verfahren zur reproduzierbaren Erzeugung von Ansichten tomographischer Bilddaten, bei dem tomographische CT-Bilddaten zusammen mit einer dreidimensionalen Modulationsübertragungsfunktion (8) der CT-Bilddaten und Koordinateninformationen bereitgestellt werden, aus denen Koordinaten der von den CT-Bilddaten umfassten Voxel in einem festen Bezugssystem des aufgezeichneten Objektes abgeleitet werden können. Aus den CT-Bilddaten wird unter Nutzung der Modulationsübertragungsfunktion (8) sowie der Koordinateninformationen durch Bildfilterung zumindest eine Ansicht des Objektbereiches erzeugt, wobei ein für die Bildfilterung eingesetzter Filteralgorithmus sowie gegebenenfalls weitere für die Erzeugung der Ansicht erforderliche Ansichts-Parameter in einer den CT-Bilddaten zugeordneten Ansichts-Datei (7) abgespeichert werden. Zur erneuten Erzeugung der Ansicht werden die Ansichts-Datei (7) aufgerufen und der Filteralgorithmus sowie gegebenenfalls die weiteren Ansichts-Parameter erneut auf den CT-Bilddaten angewendet. Das Verfahren ermöglicht die reproduzierbare Erzeugung von Ansichten tomographischer Bilddaten mit geringem Speicherbedarf und geringem Rechenaufwand.

## Beschreibung

Die vorliegende Erfindung betrifft ein Verfahren zur reproduzierbaren Erzeugung von Ansichten tomographischer CT-Bilddaten eines Objektbereiches eines Objektes, die für jedes Voxel des Objektbereiches zumindest einen Röntgenschwächungswert umfassen.

Mit modernen medizinischen Bildgebungsverfahren, wie bspw. der Röntgen-Computertomographie, können tomographische Bilddaten eines untersuchten Messobjektes, beispielsweise eines Patienten, gewonnen werden. Die Röntgen-Computertomographie ist ein spezielles Röntgenaufnahmeverfahren, mit dem Transversal-Schnittbilder erhalten werden können, also Abbildungen von Körperschichten, die im Wesentlichen senkrecht zur Körperachse orientiert sind. Die im Bild dargestellte gewebespezifische physikalische Größe ist die Verteilung des Schwächungswertes von Röntgenstrahlung µ(x,y) in der Schnittebene. Neben diesen Transversal-Schnittbildern können auch Volumenbilder des erfassten Objektbereiches erhalten werden, die die dreidimensionale Verteilung des Röntgenschwächungswertes µ(x,y,z) repräsentieren. Jedem Volumenelement, auch Voxel genannt, des erfassten Objektbereiches ist dabei ein Röntgenschwächungswert zugeordnet.

CT-Bilder können sowohl mit einem herkömmlichen Computertomographen mit endlos umlauffähigem Abtastsystem als auch mittels eines C-Bogen-Gerätes generiert werden. Der Begriff CT wird im Folgenden für beide Arten von bildgebenden Geräten verwendet. Die CT-Bilddaten werden mit einem Rekonstruktionsalgorithmus aus den vom CT-Gerät gelieferten Rohdaten berechnet, der eine Faltung mit einem speziellen Faltungskern (Kernel) umfasst. Durch die mathematische Gestalt des Faltungskerns besteht die Möglichkeit, die Bildqualität bei der Rekonstruktion eines CT-Bildes aus den Rohdaten gezielt zu beeinflussen. Beispielsweise können mit einem geeigneten Faltungskern hohe Frequenzen betont werden, um die Ortsauflösung im Bild zu erhöhen, oder - mit einen entsprechend anders gearteten Faltungskern - gedämpft werden, um das Bildrauschen zu reduzieren. Bei der Bildrekonstruktion in der Computertomographie kann damit über die Wahl des Faltungskernes die Bildcharakteristik beeinflusst werden, die durch Bildschärfe / Bildrauschen und Bildkontrast charakterisiert ist.

CT-Bilder müssen heutzutage aus Hersteller- und Produktspezifischen Rohdaten auf eigens dafür entwickelten Hochleistungs-Bildrekonstruktionsrechnern berechnet werden. Die Rohdaten sind dabei in einem Hersteller-spezifischen Format abgelegt und enthalten keine Pixel- oder Voxeldaten. Sie können daher nicht direkt zur Anzeige gebracht werden, sondern dienen ausschließlich der Rekonstruktion von Bildern oder Bildserien.

Die Anwender benötigen jedoch häufig unterschiedliche Ansichten des erfassten Objektbereiches mit unterschiedlichen Bild-parametern. Bisher mussten hierzu aus den Rohdaten beliebig viele Schnittbild-Serien durch Rekonstruktion der Rohdaten mit unterschiedlichen Einstellungen berechnet werden, bspw. mit unterschiedlichem Kernel, unterschiedlicher Schichtdicke, unterschiedlichem Inkrement, unterschiedlichem FoV (Field of View) oder unterschiedlicher Orientierung. Da diese Parameter und die zugehörigen Rekonstruktionsalgorithmen jedoch eng mit dem CT-Gerät verknüpft sind, mit dem der Objektbereich erfasst wurde, sind diese auch für jeden Hersteller und jeden Gerätetyp unterschiedlich. Die gewünschten Schnittbilder lassen sich daher nur an dem CT-System problemlos aus den Rohdaten rekonstruieren, an dem sie auch akquiriert wurden.

Diese Schnittbild-Serien bilden die Grundlage für Nachverarbeitung, Archivierung, Transfer zu anderen bildverarbeitenden oder bildgebenden Geräten und schließlich zur Befundung. Für den Transfer wird der sog. DICOM-Standard (Digital Imaging and Communications in Medicine) genutzt. Mit diesem Standard können Bilder und Daten von unterschiedlichen bildgebenden und bildverarbeitenden Geräten untereinander ausgetauscht werden. Die Bereitstellung unterschiedlicher Bildserien erfordert jedoch neben dem Speicherbedarf der Rohdaten auch den Speicherbedarf für die Bildserien, der durchaus mehrere Gigabyte betragen kann. Damit sind auch der Transfer der Bildserien und das Laden in CT-Applikationen zur Nachverarbeitung sehr zeitaufwändig und beeinträchtigt den klinischen Workflow nachteilig. Die Rekonstruktion unterschiedlicher Bildserien aus den Rohdaten erfordert ebenfalls einen erheblichen Zeitaufwand. Das Vorhalten der Rohdaten am CT-System zum Zwecke späterer Rekonstruktionen benötigt viel Speicher und ist daher aus Kostengründen zeitlich sehr beschränkt. In der Regel können die Rohdaten heute nur für wenige Tage vorgehalten werden. Zur Verlängerung der Vorhaltezeit können die Rohdaten auch auf bspw. optischen Speichermedien archiviert werden. Der Archiviervorgang und das spätere Importieren der Rohdaten sind jedoch ebenfalls zeitaufwändig und werden daher in der Praxis kaum durchgeführt.

Zur reproduzierbaren Erzeugung von Ansichten von CT-Bilddaten sind aus dem DICOM-Standard die so genannten 2D-Presentation States bekannt, in denen der darzustellende Wertebereich der CT-Werte, das so genannte Window, der Bildausschnitt in Pixeldaten sowie ein digitaler Zoom auf die Pixeldaten abgespeichert ist. Die so genannten Grayscale, Colour und Blending Presentation States ermöglichen das Ablegen von Farb- bzw. Grauwert-Codierungstabellen sowie von Rotations- und Transformationsmatrizen für eine lineare Registrierung mit Transformation für zwei Bildserien (PET-CT, SPECT-CT). Eine organbezogene Ansicht eines Volumens bzw. Volumensegments (3D-Objekt) mit variablem Bildeindruck, d.h. unterschiedlicher Bildschärfe/Bildrauschen oder unterschiedlichem Bildkontrast, ist damit nicht möglich.

Die Aufgabe der vorliegenden Erfindung besteht darin, ein Verfahren zur reproduzierbaren Erzeugung von Ansichten tomographischer Bilddaten anzugeben, das nur einen geringen Speicherbedarf erfordert und Ansichten mit unterschiedlichen Bildparametern, insbesondere mit unterschiedlicher Bildschärfe/Bildrauschen und unterschiedlichen Bildkontrast, erzeugen kann.

Die Aufgabe wird mit dem Verfahren gemäß Patentanspruch 1 gelöst. Vorteilhafte Ausgestaltungen des Verfahrens sind Gegenstand der Unteransprüche oder lassen sich der nachfolgenden Beschreibung sowie den Ausführungsbeispielen entnehmen.

Bei dem vorgeschlagenen Verfahren werden tomographische CT-Bilddaten eines Objektbereiches eines Objektes, die für jedes Voxel des Objektbereiches zumindest jeweils einen Röntgenschwächungswert umfassen, zusammen mit einer dreidimensionalen Modulationsübertragungsfunktion der CT-Bilddaten oder einer Funktion, aus der die dreidimensionale Modulationsübertragungsfunktion ableitbar ist, und Koordinateninformationen bereitgestellt, aus denen Koordinaten der von den CT-Bilddaten umfassten Voxel in einem festen Bezugssystem des Objektes abgeleitet werden können. Aus den CT-Bilddaten wird unter Nutzung der Modulationsübertragungsfunktion sowie der Koordinateninformationen durch Bildfilterung zumindest eine Ansicht des Objektbereiches erzeugt, wobei ein für die Bildfilterung eingesetzter Filteralgorithmus sowie gegebenenfalls weitere für die Erzeugung der Ansicht erforderliche Ansichts-Parameter in einer den CT-Bilddaten zugeordneten Ansichts-Datei abgespeichert werden. Zur erneuten Erzeugung der Ansicht werden dann die Ansichts-Datei aufgerufen und der Filteralgorithmus sowie gegebenenfalls die weiteren Ansichts-Parameter erneut auf die CT-Bilddaten angewendet.

Das vorliegende Verfahren nutzt hierbei die Bereitstellung von CT-Bilddaten und einer Zusatzinformation, die die dreidimensionale Modulationsübertragungsfunktion der CT-Bilddaten sowie die Koordinateninformationen umfasst. Die CT-Bilddaten werden in bekannter Weise mittels Röntgenbildgebung, d.h. mit einem CT-Gerät, erzeugt und abgespeichert. Die bei der Erfassung des Objektbereiches anfallenden Rohdaten werden dabei mit einem geeigneten Faltungskern, der vorzugsweise ein hochaufgelöstes Bild erzeugt, zunächst an einem Bildrekonstruktionsrechner rekonstruiert. Dies sollte unmittelbar am Ort der Datenentstehung erfolgen, d.h. mit dem Bildrekonstruktionsrechner des CT-Gerätes, mit dem die Daten aufgezeichnet werden. Die Rohdaten können danach verworfen werden. Die CT-Bilddaten werden hierbei vorzugsweise zusammen mit der dreidimensionalen Modulationsübertragungsfunktion der Bilddaten, oder einer Funktion, aus der die dreidimensionale Modulationsübertragungsfunktion ableitbar ist, und der entsprechenden Koordinateninformation in einem gemeinsamen Datensatz abgespeichert. Dieser Datensatz bildet die Grundlage für eine spätere Nachverarbeitung, Archivierung, den Transfer zu anderen Geräten bzw. Stationen und schließlich zur Befundung. Der Datensatz beinhaltet mit der 3D-Modulationsübertragungsfunktion und den Koordinateninformationen sämtliche Informationen, um an einem beliebigen anderen Arbeitsplatz eine beliebige Ansicht des Objektbereiches aus den Daten, im Folgenden auch als Datensicht bezeichnet, zu erzeugen.

Durch die Kenntnis der Modulationsübertragungsfunktion der CT-Bilddaten können durch reine Bildfilterung mit einem geeigneten Filter dieselben Ergebnisse erzielt werden, die mit der bisher durchgeführten Rekonstruktion aus den Rohdaten erhalten werden. Insbesondere lassen sich bei Kenntnis dieser 3D-Modulationsübertragungsfunktion durch unterschiedliche Filter aus den CT-Bilddaten Bilder mit unterschiedlicher Schärfe und unterschiedlichem Rauschen erzeugen. Eine derartige Bildfilterung ist aus der DE 102 38 322 A1 bekannt, deren Offenbarungsgehalt in dieser Hinsicht in die vorliegende Patentanmeldung einbezogen wird. Selbstverständlich lassen sich die obigen Vorteile auch erzielen, wenn die bereitgestellten Daten bzw. Informationen nicht in einem einzigen Datensatz abgespeichert, sondern auf mehrere Datensätze aufgeteilt werden, aus denen dann jedoch die gegenseitige Zuordnung erkennbar sein muss.

Beim vorliegenden Verfahren wird aus den mit den Zusatzinformationen bereitgestellten CT-Bilddaten unter Nutzung der Modulationsübertragungsfunktion sowie der Koordinateninformationen durch Bildfilterung zumindest eine gewünschte Ansicht des Objektbereiches erzeugt. Diese Ansicht kann eine beliebige Datensicht der CT-Bilddaten, insbesondere Schicht- bzw. Schnittbilder, mit unterschiedlicher Schärfe, unterschiedlichem Rauschen, unterschiedlicher Orientierung, unterschiedlichen Bildausschnitten und unterschiedlichen Schichtdicken darstellen. Der hierbei für die erforderliche Filterung der CT-Bilddaten eingesetzte Filter bzw. Filteralgorithmus sowie die weiteren Ansichts-Parameter, beispielsweise Bildausschnitt oder Bildorientierung, werden dann in einer den CT-Bilddaten zugeordneten Ansichts-Datei abgespeichert. Diese Ansichts-Datei wird im Folgenden in Analogie zu den bekannten 2D-Presentation States aus dem DICOM-Standard als Advanced Presentation State (APS) bezeichnet. Ein APS repräsentiert somit eine beliebige Ansicht auf die CT-Bilddaten, die als Volumendatensatz oder als Schichtbildstapel vorliegen können. Der APS ersetzt die heutigen Rekonstruktionen, da er keine Rohdaten mehr erfordert, und speichert gleichzeitig sämtliche Ergebnisse von Applikationen in einem Standardformat. Durch die Speicherung dieser Parameter, insbesondere des verwendeten Filteralgorithmus, kann die entsprechende Ansicht jederzeit an einem beliebigen Gerät reproduzierbar wieder erzeugt werden. Sowohl der Schichtbildstapel oder Volumendatensatz als auch der APS können als DICOM-Objekte in einem DICOM-Archiv (z.B. PACS) gespeichert werden. Damit kann ein Anwender mit sehr geringem Speicherbedarf sämtliche für eine Diagnose relevanten Bildansichten an einer beliebigen DICOM-Arbeitsstation erstellen. Alle Interaktionen auf den CT-Bilddaten, die zur Bestimmung befundungsrelevanter Bilddaten führen, können im APS gespeichert werden.

Heutige Applikationen manipulieren den Originaldatensatz, d.h. die Rohdaten, in der Regel im Bildausschnitt, in der Schichtdicke, im Filter, in der Farbkodierung, in der Orientierung im Raum, errechnen Messwerte, definieren Segmente zum Abgrenzen von Organen und Gefäßen, rendern ein Volumen, um einen 3D-Effekt in einer 2D-Ansicht zu erzeugen, quantifizieren Bildergebnisse oder definieren Pfade für eine virtuelle Kameraführung durch den Körper (z.B. Colon, Broncho). CAD-Algorithmen (CAD: Computer Aided Diagnosis) markieren Volumensegmente und klassifizieren diese als krankhaft oder gesund. Alle diese Ergebnisse können in einem APS gespeichert werden, um für einen anderen Anwender oder an einer anderen Datenstation zu einem späteren Zeitpunkt exakt die gleichen Ansichten zu erhalten, wie sie bereits einmal erzeugt wurden. Hierzu ist keine erneute Rekonstruktion aus den Rohdaten erforderlich, da beim vorliegenden Verfahren nur noch auf den einmal rekonstruierten und zusammen mit der 3D-Modulationsübertragungsfunktion und den Koordinateninformationen abgespeicherten CT-Bilddatensatz zurückgegriffen wird.

Dieser CT-Bilddatensatz mit den Zusatzinformationen bildet die Datenbasis für sämtliche im APS gespeicherten Parameter. Vorzugsweise stellt dieser CT-Bilddatensatz einen Volumendatensatz dar, der im Folgenden zusammen mit den Zusatzinformationen auch als IVB (Image Volume Database) bezeichnet wird. Die IVB stellt dann die Datenbasis für die weitere Verarbeitung dar. Die IVB kann die heutigen hersteller- und produktspezifischen CT-Rohdaten bei der Nachverarbeitung, Archivierung und dem Transfer zu anderen bildverarbeitenden oder bildgebenden Geräten ersetzen. Die IVB wird vorzugsweise in einem neuen DICOM-Standardformat gespeichert. Eine Möglichkeit hierfür besteht in der Erweiterung des heutigen DICOM-CT-Multiframes. Die IVB ersetzt hierbei die CT-Rohdaten, so dass diese nach der einmaligen Rekonstruktion der IVB nicht länger benötigt werden. Die IVB enthält hierbei nicht einen Schichtstapel aus unterschiedlichen Schnittbildern, sondern Volumendaten mit festgelegtem Koordinatensystem. In der IVB können neben den CT-Bilddaten auch das bzw. die Topogramme einer CT-Untersuchung abgespeichert werden, falls derartige Topogramme erfasst werden.

Die Koordinateninformationen, aus denen Koordinaten der von den CT-Bilddaten umfassten Voxel des Objektbereiches in einem festen Bezugssystem des Objektes abgleitet werden können, sind vorzugsweise lediglich aus einem Koordinatenwert für eines der Voxel sowie Richtungs- und Abstandsinformationen für die restlichen Voxel gebildet. Da die Voxeldaten üblicherweise auf einem äquidistanten Raster rekonstruiert werden, können die Voxelkoordinaten durch Richtungsvektoren, die die drei Achsen beschreiben (z. B. Einheitsvektoren eₓ, e_{y}, e_{z}) sowie Inkremente bzw. Deltas (z. B. dₓ, d_{y}, d_{z}) definiert werden. Zur Beschreibung der Apertur der Voxel dienen drei eindimensionale Modulationsübertragungsfunktionen, bspw. in Richtung von x, y und z, durch die 3D- Modulationsübertragungsfunktion gebildet wird. Alternativ zur Modulationsübertragungsfunktion können selbstverständlich auch die Punkbildfunktionen bzw. Empfindlichkeitsprofile verwendet werden, aus denen sich die 3D-Modulationsübertragungsfunktion ableiten lässt. Die Kenntnis dieser Übertragungsfunktion erlaubt die nachträgliche Veränderung der Bildschärfe / Schichtdicke für das jeweilige CT-Bild. Die 3D-Modulationsübertragungsfunktion beschreibt die Qualität der Abbildung des Objektbereiches auf die CT-Bilddaten, die vom bildgebenden System selbst, d. h. dem CT-Gerät und ggf. auch vom verwendeten Rekonstruktionsalgorithmus abhängt. Die Modulationsübertragungsfunktion lässt sich für jedes CT-System bestimmen und bspw. nach Digitalisierung als Wertetabelle abspeichern.

Mit dem vorliegenden Verfahren können für unterschiedliche Applikationen durch Anwendung unterschiedlicher Filteralgorithmen verschiedene Ansichten des Objektbereichs erzeugt werden, die sich in Bildschärfe und/oder Bildrauschen und/oder in einer Schichtdicke einer zugrunde liegenden Schicht des Objektbereiches unterscheiden. Für jede der verschiedenen Ansichten wird dabei vorzugsweise eine eigene Ansichts-Datei, d.h. ein eigener APS, abgespeichert. Ein APS enthält dabei eine Referenz auf den betreffenden Basisdatensatz, d.h. den Volumendatensatz (IVB) oder Schichtstapel sowie die Information über den angewendeten Filteralgorithmus.

Als weitere Ansichts-Parameter können im APS beispielsweise der Bildausschnitt (FoV: Field of View), die Orientierung im Raum und/oder ein VRT Preset (Rendering Parameter, Colour Table) abgespeichert werden. Weiterhin besteht die Möglichkeit, beliebig viele 3D-Volumensegmente im Koordinatensystem des Volumendatensatzes, Pfade für eine geführte Ansicht, beispielsweise Colon/Broncho Fly-Through, oder so genannte Keyimages als 2D-Schnittebenen (auch gekrümmt) orientiert mit bestimmter Drehung im Koordinatensystem des Volumendatensatzes im APS abzulegen. Zusätzlich können Marker, Annotationen oder Distanz/Volumenmessungen, die an der Ansicht durchgeführt wurden, im APS hinterlegt werden. Marker können beispielsweise als 2D- oder 3D-Informationen, z.B. als Punkt, als ROI (Region of Interest) oder als VOI (Volume of Interest), hinterlegt werden.

Mit dem vorliegenden Verfahren müssen Bildserien mit unterschiedlichen Qualitätseigenschaften nicht mehr getrennt aus den Rohdaten rekonstruiert werden. Der jeweils gewünschte Bildeindruck kann dem Anwender unmittelbar präsentiert werden, wobei das bisher erforderliche Warten auf die Ergebnisse der Rekonstruktionen und der sich erst im Anschluss ergebende Qualitätscheck zur Bestätigung der gewünschten Bildqualität entfallen. Neben der hohen Zeitersparnis bei der erneuten Erzeugung einer Ansicht lässt sich das Datenvolumen drastisch reduzieren, da auch beispielsweise Dünnschichtserien, die bislang primär den Input für Nachverarbeitungsschritte bilden, nicht mehr aus den Rohdaten rekonstruiert werden müssen, sondern nur als APS zu speichern sind. Mit dem APS stehen dem Anwender die bereits genannten Möglichkeiten der Echtzeit-Filterung in axialer Richtung (entspricht heutigem Rekonstruktionskernel, sowie in z-Richtung (Schichtdicke und Rekonstruktionsinkrement) jederzeit nach der Datenakquisition zur Verfügung. Alle Interaktionen auf dem Volumen, die zur Bestimmung der befundungsrelevanten Bilddaten führen, können im APS gespeichert werden. Hierbei kann neben der Definition der Bildserien auch die Markierung einzelner Bilder sowie die Eingabe von Kommentaren oder Befunden ermöglicht werden.

Als zusätzlicher Vorteil gegenüber den bisher verfügbaren 2D-Presentation States können im vorgeschlagenen APS auch 3D-Segmente zur Isolierung von Tumoren, Gefäßbäumen usw. gespeichert werden. Weiterhin sind beliebig viele gerade und gekrümmte Schnitte mit beliebiger Orientierung im Koordinatensystem des Volumendatensatzes im APS speicherbar und können von jeder Applikation entsprechend ausgelesen werden, um bestimmte 2D-Schnitte als Keyimages zu adressieren.

Eine Vorrichtung zur Durchführung des Verfahrens umfasst dabei eine Recheneinheit, die eine Schnittstelle zu einer Datenbank aufweist, auf der die CT-Bilddaten, vorzugsweise als IVB, abgespeichert sind. Ein Bilderzeugungsmodul greift auf einen gewünschten APS auf der Datenbank zurück, liest diesen aus und verarbeitet die CT-Bilddaten entsprechend den im APS angegebenen Parametern. Weiterhin ist ein APS-Generierungsmodul vorgesehen, das von einem Anwender auf die Bilddaten angewendete Filteralgorithmen und gegebenenfalls zusätzliche Ansichtsparameter als APS in der Datenbank abspeichert. Auf diese Weise können durch Interaktion mit dem Anwender aus dem ursprünglichen CT-Bilddatensatz neue APS erzeugt oder Ansichten unter Zugrundelegung bekannter APS dargestellt werden.

Das vorliegende Verfahren wird nachfolgend anhand von Ausführungsbeispielen in Verbindung mit den Zeichnungen ohne Beschränkung des durch die Patentansprüche vorgegebenen Schutzbereichs nochmals näher erläutert. Hierbei zeigen:
- Fig. 1: einen Überblick über die Bereitstellung der tomographischen Bilddaten;
- Fig. 2: ein Beispiel für einen Anwendungsserver zur Erzeugung oder zum Auslesen von APS;
- Fig. 3: ein Beispiel für einen zentralen Speicher mit IVB's und APS's;

- Fig. 4: ein Beispiel für die Erzeugung und Abspeicherung von APS;
- Fig. 5: ein erstes Beispiel für eine Referenzierung von 3D-Segmenten;
- Fig. 6: ein zweites Beispiel für eine Referenzierung von 3D-Segmenten;
- Fig. 7: ein drittes Beispiel für eine Referenzierung von 3D-Segmenten;
- Fig. 8: ein viertes Beispiel für eine Referenzierung von 3D-Segmenten; und
- Fig. 9: ein Beispiel für eine Modulationsübertragungsfunktion sowie für eine Filterfunktion, mit der ein gewünschter Bildein-druck erzeugt werden kann.

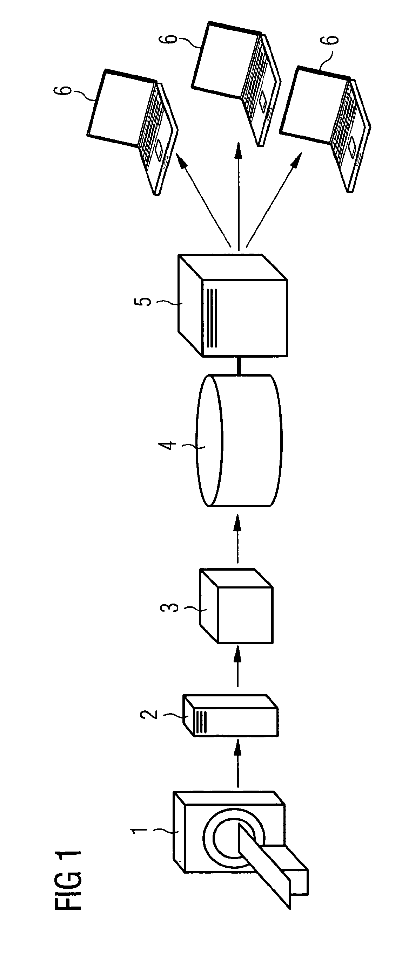

Figur 1 gibt einen Überblick über den Workflow bei der Erzeugung von Ansichten tomographischer Bilddaten gemäß dem vorliegenden Verfahren. Zunächst werden mit einem CT-Gerät 1 die CT-Bilddaten des Bereiches des Objektes aufgezeichnet. Bei diesem CT-Gerät 1 kann es sich um einen Computertomographen oder auch um so genanntes C-Bogen-Gerät handeln. Für die Bildrekonstruktion aus dem CT-Scan werden die gemessenen Rohdaten an einen Bildrechner 2 weitergeleitet, mit dem sich aus den Rohdaten unter Nutzung eines geeigneten Rekonstruktionsalgorithmus ein 3D-Bilddatensatz erzeugen lässt. Dieser 3D-Bilddatensatz ist im vorliegenden Beispiel ein Volumendatensatz, in dem jedem Volumenelement (Voxel) des untersuchten Objektbereichs ein Röntgenschwächungswert µ (x,y,z) bzw. ein daraus abgeleiteter Grauwert zugeordnet ist.

Aus diesem Volumendatensatz wird ein Datensatz mit Zusatzinformation erzeugt, die die 3D-Modulationsübertragungsfunktion der CT-Bilddaten sowie eine Information über die Voxelkoordinaten des CT-Bilddatensatzes umfasst. Dieser neue Volumendatensatz, der IVB 3, wird an eine zentrale Datenbank 4 übermittelt und dort gespeichert. Die zentrale Datenbank 4 ist mit einem Anwendungsserver 5 verbunden, in dem die gewünschte Datensicht aus der IVB 3 erzeugt und an entsprechende Clients 6 übermittelt wird.

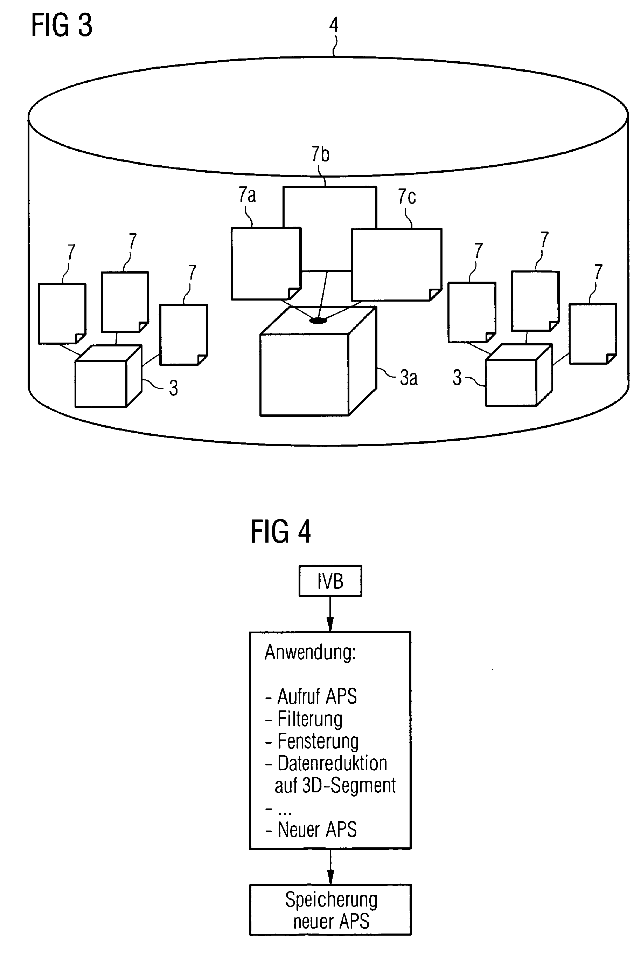

In der zentralen Datenbank 4 werden auch die zu den Datensichten gehörenden APS 7 abgespeichert, und zwar zugeordnet zu den jeweiligen IVB 3. Dies ist in der Figur 3 zu erkennen, die beispielhaft drei IVBs mit den zugehörigen APS schematisch darstellt. Selbstverständlich ist die Zahl der APS nicht begrenzt, sondern hängt lediglich von der Zahl der gewünschten unterschiedlichen Datensichten ab. Im mittleren Bereich der zentralen Datenbank 4 ist ein Beispiel hervorgehoben, bei dem einer der APS 7a eine Darstellung von Lungenknoten, ein anderer 7b eine Darstellung des extrahierten Herzens und ein dritter 7c eine spezielle durch einen Anwender erzeugte Datensicht auf die IVB 3a, in diesem Beispiel vom Thorax eines Patienten, umfassen.

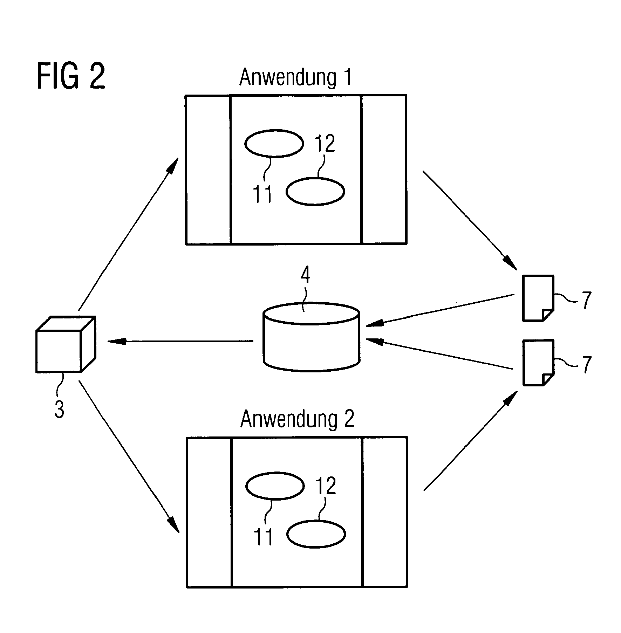

Figur 2 zeigt ein Beispiel für die Erzeugung von zwei APS 7. Hierzu ruft der Anwendungsserver in einer ersten Anwendung einen der in der Datenbank 4 gespeicherten APS auf, liest diesen aus, wendet die darin enthaltenen Parameter und Filter auf die zugehörige IVB 3 an und stellt die Ansicht auf dem entsprechenden Client 6 dar. Der Anwender hat dann die Möglichkeit, durch Vorgabe anderer Bildparameter diese Ansicht zu ändern. Hierzu stehen ihm geeignete Werkzeuge 11 und Funktionen 12 zur Verfügung. Nach der Anpassung der Ansicht mit den gewünschten Bild-Parametern werden die für diese Ansicht erforderlichen Bildparameter, insbesondere die eventuell geänderte Filterfunktion sowie weitere Ansichtsparameter im neuen APS 7 in der zentralen Datenbank 4 durch den Anwendungsserver gespeichert. Die gleiche Vorgehensweise erfolgt durch die zweite Anwendung, die zu einer anderen APS 7 führt. Auch eine automatische Generierung einer APS durch entsprechende Anwendungen ist möglich, für die vorgegebene Bildparameter erforderlich sind. Dies kann beispielsweise für eine automatisierte Lungenknotenauswertung umgesetzt werden, die einen bestimmten Anspruch an die Auflösung, Bildschärfe und das Rauschen hat, um zuverlässig reproduzierbare Ergebnisse zu erzielen. Eine derartige Anwendung wendet dann automatisch die entsprechenden Bildparameter durch Aufruf der zugeordneten APS auf die IVB an, um dann auf Basis der erzeugten Ansicht die Segmentierung vorzunehmen.

Figur 4 zeigt ein weiteres Beispiel für eine Anpassung einer vorhandenen APS zur Erzeugung einer neuen APS. Hierbei ruft die Anwendung auf dem Anwendungsserver 5 eine bereits vorhandene APS zur IVB auf, um die Daten in eine Form zu bringen, die durch die Anwendung verarbeitet werden kann. Die Weiterverarbeitung umfasst dann eine Filterung, eine Fensterung und eine Reduzierung der Daten auf eine vorgegebene 2D-Fläche oder ein 3D-Volumensegment. Weiterhin kann auch ein anderer Filter zur Erzeugung einer anderen Bildqualität auf die IVB angewendet werden. Zu der dann erhaltenen Ansicht werden sämtliche erforderlichen Ansichts-Parameter, insbesondere Orientierung, Position, Zoom-Faktor, Filter, Segmentierung, Marker, Farbe/Graustufe usw. als neuer bzw. weiterer APS abgespeichert.

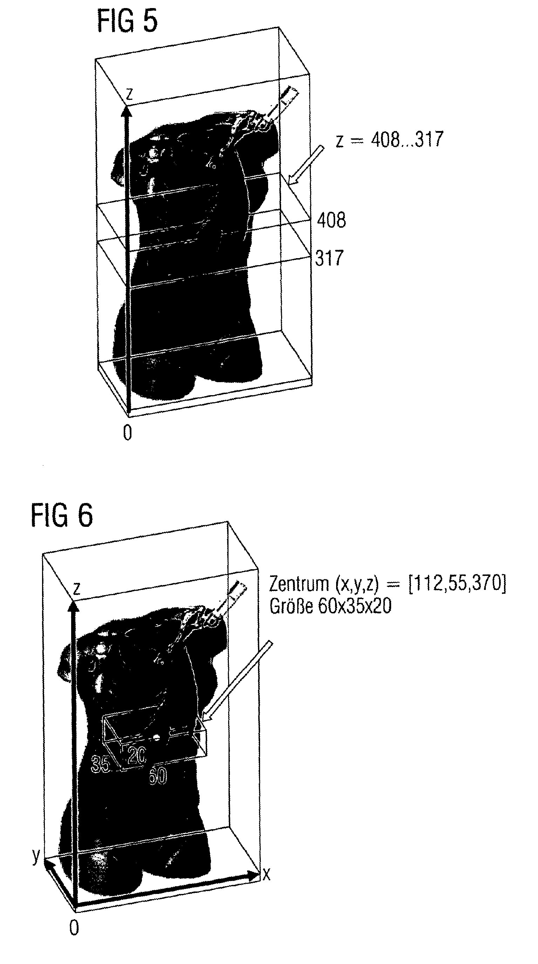

Figur 5 zeigt ein Beispiel für die Referenzierung eines 3D-Volumensegmentes in einem APS. In diesem einfachsten Fall wird die bei der CT-Aufnahme vorgegebene z-Richtung (Richtung der Systemachse) genutzt, die in der IVB aus der Koordinateninformation abgeleitet werden kann. Durch Angabe einer Start-und einer Endkoordinate in z-Richtung kann dann ein bestimmtes 3D-Segment im Volumendatensatz angesprochen werden. Diese Angabe begrenzt die für die Ansicht erzeugten Daten auf die spezifizierte Region, die beispielsweise das Herz einschließt. Anschließend kann ein geeigneter Filter auf diese reduzierten Daten angewendet werden, um die gewünschte Ansicht, gegebenenfalls für eine Weiterverarbeitung, zu erzeugen.

Figur 6 zeigt ein weiteres Beispiel, bei dem die 3D-Koordinaten des Zentrums eines gewünschten 3D-Volumensegments sowie dessen in Ausdehnung in x-,y- und z-Richtung angegeben werden.

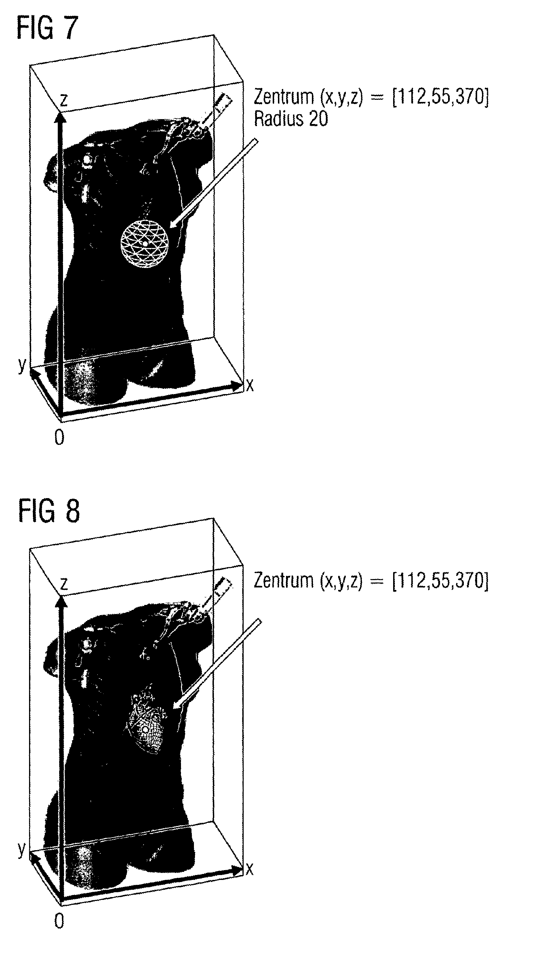

Ein weiteres Beispiel einer derartigen Referenzierung zeigt Figur 7, bei dem das 3D-Volumensegment kugelförmig ausgebildet ist. Die Festlegung dieses Segments erfolgt hierbei wiederum durch Angabe der dreidimensionalen Koordinaten des Zentrums sowie durch Angabe des Radius dieses Volumensegments.

Figur 8 zeigt schließlich die Referenzierung eines segmentierten Organs oder einer segmentierten Region innerhalb des von den CT-Bilddaten umfassten Objektbereiches. Auch hier werden wiederum die dreidimensionalen Koordinaten des Zentrums dieses segmentierten Organs bzw. der segmentierten Region zur Referenzierung angegeben.

Mit den vier zuletzt genannten Beispielen lässt sich die zu verarbeitende Datenmenge deutlich reduzieren, da jeweils nur die Daten des segmentierten bzw. referenzierten Bereiches angezeigt werden, die im jeweiligen APS angegeben sind. Bei jedem erneuten Aufruf dieses APS werden dem Anwender exakt die gleichen Ansichten dargestellt.

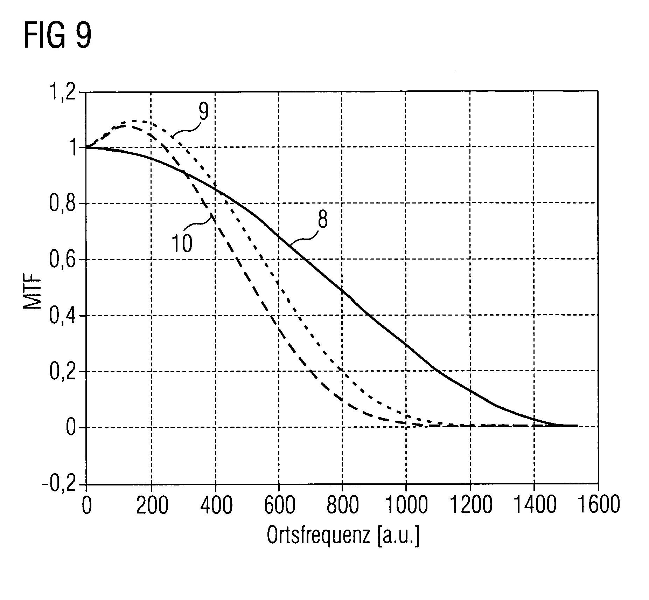

Figur 9 zeigt beispielhaft zur Veranschaulichung eine lediglich eindimensionale Modulationsübertragungsfunktion 8 sowie eine Filterfunktion 9, die einen vom Anwender gewünschten Bildeindruck erzeugt. Die Modulationsübertragungsfunktion 8 ist als Tabelle in der IVB enthalten. Ein vom Anwender gewünschter Bildeindruck entspricht einer Funktion, die durch die Kurve 10 in dem Diagramm dargestellt ist. Aus diesem gewünschten Bildeindruck (Rauschen, Schärfe) bzw. der zugehörigen Funktion und der in der IVB enthaltenen Modulationsübertragungsfunktion 8 kann dann die Filterfunktion 9 berechnet werden, die erforderlich ist, um von der Modulationsübertragungsfunktion 8 zu dem Bildeindruck bzw. der damit verbundenen Funktion 10 zu kommen. Die Filterfunktion 9 wird, vorzugsweise mit wenigen Stützstellen als Tabelle, in einem APS hinterlegt. Durch Aufruf dieses APS kann dann ein anderer oder der gleiche Anwender jederzeit durch Aufrufen des APS den identischen Bildeindruck aus der IVB erzeugen ohne hierfür eine zeitaufwendige Bildrekonstruktion durchführen zu müssen.

Mit dem vorliegenden Verfahren wird eine Rekonstruktion von mehreren Bildserien überflüssig. Dies erspart Zeit und optimiert den klinischen Workflow. Bildserien müssen nicht mehr explizit aus den Rohdaten rekonstruiert werden. Stattdessen werden nur noch die logischen Datensichten in Form von APS erzeugt. Dadurch wird eine erhebliche Datenreduktion erreicht, da ein APS kaum Speicher benötigt. Die für die Befundung benötigten Bilddaten (Ansicht auf IVB mittels APS) können hersteller- und geräteunabhängig erzeugt und ausgetauscht werden. Die Bereitstellung der für die Befundung notwendigen Bilddaten muss dann nicht mehr am CT-System selbst erfolgen, sondern kann an beliebigen Arbeitsplätzen vorgenommen werden. Der zeitaufwendige Transfer von Bildserien und das Laden dieser Daten in CT-Applikationen zur Nachverarbeitung entfällt.

## Patentansprüche

1. Verfahren zur reproduzierbaren Erzeugung von Ansichten tomographischer Bilddaten, bei dem
- tomographische CT-Bilddaten eines Objektbereiches eines Objektes, die für jedes Voxel des Objektbereiches zumindest jeweils einen Röntgenschwächungswert umfassen, zusammen mit einer dreidimensionalen Modulationsübertragungsfunktion (8) der CT-Bilddaten oder einer Funktion, aus der die dreidimensionale Modulationsübertragungsfunktion (8) ableitbar ist, und Koordinateninformationen bereitgestellt werden, aus denen Koordinaten der von den CT-Bilddaten umfassten Voxel in einem festen Bezugssystem des Objektes abgeleitet werden können,
- aus den CT-Bilddaten unter Nutzung der Modulationsübertragungsfunktion (8) sowie der Koordinateninformationen durch Bildfilterung zumindest eine Ansicht des Objektbereiches erzeugt wird,
- ein für die Bildfilterung eingesetzter Filteralgorithmus sowie gegebenenfalls weitere für die Erzeugung der Ansicht erforderliche Ansichts-Parameter in einer den CT-Bilddaten zugeordneten Ansichts-Datei (7) abgespeichert wird, und
- zur erneuten Erzeugung der Ansicht die Ansichts-Datei (7) aufgerufen und der Filteralgorithmus sowie gegebenenfalls die weiteren Ansichts-Parameter erneut auf die CT-Bilddaten angewendet werden.

2. Verfahren nach Anspruch 1,
**dadurch gekennzeichnet,**
**dass** für unterschiedliche Applikationen durch Anwendung unterschiedlicher Filteralgorithmen verschiedene Ansichten des Objektbereiches erzeugt werden, die sich in Bildschärfe und/oder Bildrauschen und/oder in einer Schichtdicke einer zugrunde liegenden Schicht des Objektbereiches unterscheiden, wobei für jede der verschiedenen Ansichten eine eigene Ansichts-Datei (7) abgespeichert wird.

3. Verfahren nach Anspruch 1 oder 2,
**dadurch gekennzeichnet,**
**dass** als weitere Ansichts-Parameter eine für die Ansicht gewählte räumliche Orientierung des Objektes in der Ansichts-Datei (7) abgespeichert wird.

4. Verfahren nach einem der Ansprüche 1 bis 3,
**dadurch gekennzeichnet,**
**dass** als weitere Ansichts-Parameter eine Information über einen für die Ansicht gewählten Bildausschnitt in der Ansichts-Datei (7) abgespeichert wird.

5. Verfahren nach einem der Ansprüche 1 bis 4,
**dadurch gekennzeichnet,**
**dass** als weitere Ansichts-Parameter für ein Volume-Rendering gewählte Rendering-Parameter in der Ansichts-Datei (7) abgespeichert werden.

6. Verfahren nach einem der Ansprüche 1 bis 5,
**dadurch gekennzeichnet,**
**dass** als weitere Ansichts-Parameter eine Position und Ausdehnung ein oder mehrerer für die Ansicht gewählte VolumenSegmente des Objektes in der Ansichts-Datei (7) abgespeichert werden.

7. Verfahren nach einem der Ansprüche 1 bis 6,
**dadurch gekennzeichnet,**
**dass** als weitere Ansichts-Parameter ein oder mehrere ebene und/oder gekrümmte 2D-Schnittebenen für Key-Images in der Ansichts-Datei (7) abgespeichert werden.

8. Verfahren nach einem der Ansprüche 1 bis 7,
**dadurch gekennzeichnet,**
**dass** die CT-Bilddaten als Volumendatensatz bereitgestellt werden.

9. Verfahren nach einem der Ansprüche 1 bis 8,
**dadurch gekennzeichnet,**
**dass** bei der Erzeugung der CT-Bilddaten ein Rekonstruktionsalgorithmus für eine hohe Ortsauflösung eingesetzt wird.

10. Verfahren nach einem der Ansprüche 1 bis 9,
**dadurch gekennzeichnet,**
**dass** die CT-Bilddaten mit der dreidimensionalen Modulationsübertragungsfunktion (8) der CT-Bilddaten oder der Funktion, aus der die dreidimensionale Modulationsübertragungsfunktion (8) ableitbar ist, und den Koordinateninformationen in einem gemeinsamen Datensatz (3) bereitgestellt werden.

11. Verfahren nach einem der Ansprüche 1 bis 10,
**dadurch gekennzeichnet,**
**dass** der gemeinsame Datensatz (3) als Standard-DICOM Objekt verwendet wird.

12. Verfahren nach einem der Ansprüche 1 bis 11,
**dadurch gekennzeichnet,**
**dass** die Ansichts-Datei (7) als Standard-DICOM Objekt verwendet wird.
